# EUROPÄISCHE PATENTANMELDUNG

(11) **EP 1 527 930 A2**
(43) Veröffentlichungstag der Anmeldung: **04.05.2005**
(21) Anmeldenummer: 04025106.8
(22) Anmeldetag: 22.10.2004
(51) Int. Cl.: B60K 15/05

(54) **Vorrichtung zur Verriegelung und/oder Entriegelung einer Tanklappe**

(30) Priorität: 29.10.2003 DE 10350470
(71) Anmelder: Alfred Engelmann Holding GmbH, 30900 Wedemark (DE)
(72) Erfinder: Busch, Marcus, 31275 Lehrte (DE); Bultmann, Etzhard, 30900 Wedemark (DE)
(74) Vertreter: Stornebel, Kai (DE)

(57) **Zusammenfassung**

Vorrichtung zur Verriegelung und/oder Entriegelung einer Tankklappe (1), insbesondere an Kraftfahrzeugen, wobei die Tankklappe (1) über ein Aufnahmeelement (2) und ein Verriegelungsteil (3), das zur Verriegelung formschlüssig mit dem Aufnahmeelement (2) in Eingriff steht, verriegelbar ist, wobei der Tankklappe (1) ein Schaltelement (4) zugeordnet ist, das bei einem Druck auf die Tankklappe (1) einen mit dem Verriegelungsteil (3) gekoppelten Aktor aktiviert, der das Verriegelungsteil (3) mit dem Aufnahmeelement (2) in und/oder außer Eingriff bringt.

## Beschreibung

Die Erfindung betrifft eine Vorrichtung zur Verriegelung und/oder Entriegelung einer Tankklappe, insbesondere an Kraftfahrzeugen, wobei die Tankklappe über ein Aufnahmeelement und ein Verriegelungsteil, das zur Verriegelung formschlüssig mit dem Aufnahmeelement in Eingriff steht, verriegelbar ist.

Aus dem Stand der Technik sind Vorrichtungen zur Verriegelung oder Entriegelung einer Tankklappe bekannt, bei denen an der Tankklappe eine Lasche mit einer Durchgangsöffnung ausgebildet ist, in die zur Verriegelung ein Verriegelungsteil eingeschoben wird. Dieses Einschieben bzw. Herausziehen zur Entriegelung erfolgt angetrieben über einen Stellmotor, hydraulisch, pneumatisch oder über einen Magnetschalter. Nach der Entriegelung muss der Fahrzeugnutzer die Tankklappe hintergreifen, was mitunter schwierig ist.

Aufgabe der Erfindung ist es, eine Vorrichtung zur Verriegelung und/oder Entriegelung einer Tankklappe bereitzustellen, die ein erleichtertes Öffnen der Tankklappe ermöglicht.

Erfindungsgemäß wird diese Aufgabe durch eine Vorrichtung mit den Merkmalen des Anspruches 1 gelöst. Dabei ist der Tankklappe ein Schaltelement zugeordnet, das bei einem Druck auf die Tankklappe einen mit dem Verriegelungsteil gekoppelten Aktor aktiviert, der das Verriegelungsteil mit dem Aufnahmeelement in und/oder außer Eingriff bringt. Durch Druck auf die Tankklappe wird das Schaltelement ausgelöst, welches den Impuls an den Aktor, beispielsweise einen Stellmotor oder einen Magnetschalter weiterleitet und das Verriegelungsteil verschiebt oder verschwenkt. Die Klappe bleibt also vollständig verriegelt, bis ein entsprechender Impuls von außen auf die Tankklappe ausgeübt wird. Sobald das Schaltelement betätigt wurde, wird die Tankklappe freigegeben und kann leicht geöffnet werden.

Vorteilhafter Weise ist das Schaltelement als ein Mikroschalter ausgebildet, der entweder zusammen mit dem Aktor an der Tankklappe befestigt ist oder aber innerhalb des Kraftfahrzeuges, beispielsweise in einer Tankmulde oder in einem Gehäuse, untergebracht ist.

Eine Weiterbildung der Erfindung sieht vor, dass dem Aufnahmelement oder auch der Tankklappe ein Federelement zugeordnet ist, das im verriegelten Zustand der Tankklappe diese in Öffnungsrichtung belastet, so dass nach einer Entriegelung diese aus der Verriegelungsstellung herausklappt und über die Fahrzeugaußenhaut, die normalerweise mit der Tankklappe eine Kontur bildet, heraussteht. Dadurch wird das vollständige Öffnen der Tankklappe erleichtert. Durch die Federbelastung und Aufbringung einer Kraft durch das Federelement wird das Aufnahmeelement gegen das Verriegelungsteil gedrückt, wenn dieses formschlüssig im Eingriff mit dem Aufnahmeelement steht. Auf diese Weise wird ein Klappern der Tankklappe vermieden, da das Aufnahmeelement gegenüber dem Verriegelungsteil verspannt ist.

Eine Ausgestaltungsform der Erfindung sieht vor, dass das Federelement zwischen dem Schaltelement und der Tankklappe oder dem Aufnahmeelement angeordnet ist, so dass das Schaltelement auch als federbelasteter Tastschalter wirkt und die Tankklappe nach oben bzw. nach außen drücken kann. Vorteilhafter Weise ist das Federelement dergestalt ausgelegt, dass die Tankklappe im entriegelten Zustand aus der Verriegelungsstellung herausgeschwenkt ist, also über die Fahrzeugaußenhaut heraussteht.

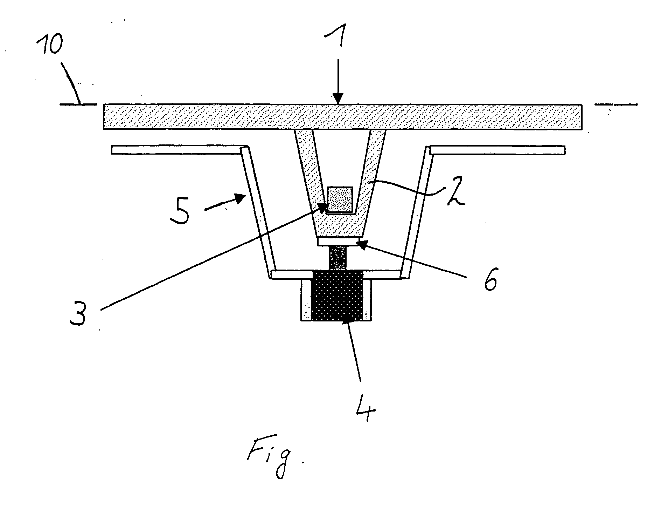

Nachfolgend wird ein Ausführungsbeispiel anhand der beigefügten Figur erläutert, die eine Querschnittsansicht einer Ausführungsform zeigt. Die Figur zeigt eine Tankklappe 1, die im wesentlichen bündig mit einer Fahrzeugaußenhaut 10 abschließt, so dass eine nahezu geschlossene Konturlinie einer Fahrzeugkarosserie ausgebildet wird. An der Tankklappe 1 ist ein Aufnahmeelement 2 als ein Bügel ausgebildet, der an der Innenseite der Tankklappe 1 befestigt oder angeformt ist. In dieses Aufnahmeelement greift ein Verriegelungsteil 3 ein, das an einem Gehäuse 5 oder an der Fahrzeugkarosserie festgelegt ist. Durch den formschlüssigen Eingriff des Verriegelungsteils 3 in das Aufnahmeelement 2 ist die Tankklappe 1 in der dargestellten Position verriegelt. Unterhalb des Aufnahmeelementes 2 ist ein Federelement 6 ausgebildet, das zugleich mit einem Mikroschalter 4 gekoppelt ist. Wird nun die Tankklappe in Richtung auf den Mikroschalter 4 bewegt, was im Rahmen eines Klappenüberhubs, also eines Spiels im geschlossenen Zustand, möglich ist, wird der Mikroschalter 6 betätigt, wodurch ein nicht dargestellter Aktor, beispielsweise ein Stellmotor oder ein Magnetschalter, aktiviert wird. Dieser Aktor bewegt das Verriegelungsteil 3 aus dem Aufnahmeelement 2 heraus und ermöglicht ein Verschwenken der Tankklappe 1 in eine geöffnete Stellung. Gleichzeitig mit dem Entriegeln wird über das Federelement 6 das Aufnahmeelement 2 und damit die Tankklappe 1 in Richtung von dem Schaltelement 4 weggedrückt, so dass die Tankklappe 1 über die Fahrzeugaußenhaut 10 heraussteht und zum Betanken einfach hintergriffen und geöffnet werden kann.

Alternativ zu der Ausbildung des Federelementes 6 an dem Mikroschalter 1 ist es vorgesehen, dass eine Feder an der Drehachse der Tankklappe 1 angreift und diese in eine geöffnete Stellung drängt.

Zum Verriegeln der Tankklappe 1 wird diese aus der geöffneten Stellung in die geschlossene Stellung verschwenkt, und über den Tankklappenüberhub wird der Mikroschalter 4 aktiviert. Daraufhin wird der Impuls dem nicht dargestellten Stellmotor oder Magnetschalter übermittelt, der das Verriegelungsteil 3 in die entgegengesetzte Richtung verschiebt oder verschwenkt und formschlüssig in Eingriff mit dem Aufnahmeelement 2 bringt.

Eine Verriegelung oder Entriegelung wird somit unmittelbar an der Tankklappe 1 bewirkt, wobei zur dauerhaften Verriegelung eine Unterbrechung des Schaltkreises zwischen Schaltelement 4 und Aktor vorgesehen ist.

Grundsätzlich ist es möglich, sowohl den Mikroschalter 4 als auch das Federelement 6 in der Tankklappe 1 zu integrieren und ein Aufnahmeelement 2 in dem Gehäuse 5 oder an der Fahrzeugkarosserie vorzusehen.

## Patentansprüche

1. Vorrichtung zur Verriegelung und/oder Entriegelung einer Tankklappe (1), insbesondere an Kraftfahrzeugen, wobei die Tankklappe (1) über ein Aufnahmeelement (2) und ein Verriegelungsteil (3), das zur Verriegelung formschlüssig mit dem Aufnahmeelement (2) in Eingriff steht, verriegelbar ist, **dadurch gekennzeichnet, dass** der Tankklappe (1) ein Schaltelement (4) zugeordnet ist, das bei einem Druck auf die Tankklappe (1) einen mit dem Verriegelungsteil (3) gekoppelten Aktor aktiviert, der das Verriegelungsteil (3) mit dem Aufnahmeelement (2) in und/oder außer Eingriff bringt.

2. Vorrichtung nach Anspruch 1, **dadurch gekennzeichnet, dass** der Aktor ein Stellmotor oder ein Magnetschalter ist, der das Verriegelungsteil (3) verschiebt oder verschwenkt.

3. Vorrichtung nach Anspruch 1 oder 2, **dadurch gekennzeichnet, dass** das Schaltelement (4) als ein Mikroschalter ausgebildet ist.

4. Vorrichtung nach einem der voranstehenden Ansprüche, **dadurch gekennzeichnet, dass** dem Aufnahmeelement (2) oder der Tankklappe (1) ein Federelement (6) zugeordnet ist, das im verriegelten Zustand der Tankklappe (1) diese in Öffnungsrichtung belastet.

5. Vorrichtung nach Anspruch 4, **dadurch gekennzeichnet, dass** das Federelement (6) zwischen dem Schaltelement (4) und der Tankklappe (1) oder dem Aufnahmeelement (2) angeordnet ist.

6. Vorrichtung nach Anspruch 4 oder 5, **dadurch gekennzeichnet, dass** das Federelement (6) dergestalt ausgelegt ist, dass die Tankklappe (1) im entriegelten Zustand aus der Verriegelungsstellung herausgeschwenkt ist.
